# EUROPÄISCHE PATENTSCHRIFT

(11) **EP 3 346 120 B1**
(45) Veröffentlichungstag und Bekanntmachung des Hinweises auf die Patenterteilung: **10.07.2019**
(21) Anmeldenummer: 17201244.5
(22) Anmeldetag: 13.11.2017
(51) Int. Cl.: F02M 43/04, F02M 25/022, F02M 25/028, F02D 19/12

(54) **WASSEREINSPRITZVORRICHTUNG EINER BRENNKRAFTMASCHINE UND VERFAHREN ZUM BETREIBEN EINER SOLCHEN WASSEREINSPRITZVORRICHTUNG**
WATER INJECTION DEVICE OF A COMBUSTION ENGINE AND METHOD FOR OPERATING SAME
DISPOSITIF D'INJECTION D'EAU D'UN MOTEUR À COMBUSTION INTERNE ET PROCÉDÉ DE FONCTIONNEMENT D'UN TEL DISPOSITIF D'INJECTION D'EAU

(30) Priorität: 10.01.2017 DE 102017200298
(43) Veröffentlichungstag der Anmeldung: 11.07.2018
(73) Patentinhaber: Robert Bosch GmbH, 70442 Stuttgart (DE)
(72) Erfinder: Burak, Ingmar, 70437 Stuttgart (DE); Schenk, Peter, 71640 Ludwigsburg (DE)

(56) Entgegenhaltungen:
- WO-A1-2010/036093
- WO-A1-2016/177543
- WO-A1-2016/177544
- DE-A1- 19 747 268
- US-A1- 2004 144 339
- US-A1- 2007 204 813
- US-B1- 7 007 669

## Beschreibung

### Stand der Technik

Die vorliegende Erfindung betrifft eine Wassereinspritzvorrichtung einer Brennkraftmaschine sowie eine derartige Brennkraftmaschine. Ein weiterer Aspekt der Erfindung betrifft ein Verfahren zum Betreiben einer derartigen Wassereinspritzvorrichtung.

Aufgrund steigender Anforderungen an eine gute Gemischaufbereitung und reduzierte Kohlenstoffdioxidemissionen werden Brennkraftmaschinen zunehmend hinsichtlich des Kraftstoffverbrauchs optimiert. Systemlösungen, die die genannten Anforderungen bestmöglich erfüllen, schlagen die Benutzung von zwei Kraftstoffinjektoren pro Zylinder vor. Allerdings können bekannte Brennkraftmaschinen in Betriebspunkten mit hoher Last nicht optimal im Hinblick auf den Verbrauch betrieben werden, da der Betrieb durch Klopfneigung und hohe Abgastemperaturen begrenzt ist. Eine mögliche Maßnahme zur Reduzierung der Klopfneigung und zur Senkung der Abgastemperaturen ist die Einspritzung von Wasser.

Um dies zu ermöglichen, wird zusätzlich zu den Kraftstoffinjektoren ein Wasserinjektor benutzt. Allerdings nimmt durch das Vorsehen von insgesamt drei Injektoren die Baugröße der Brennkraftmaschine zu.

Ein weiteres Problem bei bekannten Wassereinspritzsystemen ist eine mögliche Vereisung von wasserführenden Komponenten des Wassereinspritzsystems. Um das System auch bei Temperaturen unterhalb des Gefrierpunktes des im Wassereinspritzsystem verwendeten Wassers zu betreiben, werden Frostschutzkomponenten dem Wasser des Wassereinspritzsystems zugesetzt.

Diese Komponenten beeinflussen jedoch das Brennverhalten der Brennkraftmaschine und erfordern zusätzliche Betriebsstoffe.

Wassereinspritzvorrichtungen aus dem Stand der Technik sind beispielsweise aus der WO 2016/177544 A1 und der DE 197 47 268 A1 bekannt.

### Offenbarung der Erfindung

Die erfindungsgemäße Wassereinspritzvorrichtung einer Brennkraftmaschine mit den Merkmalen des Anspruchs 1 weist demgegenüber den Vorteil auf, dass eine Beschädigung der Bauteile der Wassereinspritzvorrichtung durch Vereisung vermieden werden kann, ohne dass die Bauteile eisdruckfest ausgelegt sind. Dazu sind kein weiterer Betriebsstoff oder zusätzliche Komponenten erforderlich. Ferner ist ein einfaches und günstiges Design der Wassereinspritzvorrichtung möglich. Dies wird erfindungsgemäß durch eine Wassereinspritzvorrichtung einer Brennkraftmaschine erreicht, wobei die Wassereinspritzvorrichtung einen Wassertank zur Speicherung von Wasser, mindestens einen Wasser-Kraftstoffinjektor, mindestens einen Wasserinjektor, ein Förderelement, und eine Steuereinheit umfasst. Dabei ist der Wasser-Kraftstoffinjektor mittels einer Wasserleitung mit dem Wassertank verbunden und über eine Kraftstoffleitung mit Kraftstoff versorgbar. Der Wasser-Kraftstoffinjektor ist ferner eingerichtet, Wasser und/oder Kraftstoff einzuspritzen. Der Wasserinjektor ist mit dem Wassertank verbunden und eingerichtet, Wasser einzuspritzen. Weiterhin ist das Förderelement eingerichtet, Wasser aus dem Wassertank zum Wasserinjektor und/oder zum Wasser-Kraftstoffinjektor zu fördern. Vorzugsweise ist die Steuereinheit eingerichtet, den Wasserinjektor zu öffnen, wobei das Förderelement eingerichtet ist, im Wasserinjektor und/oder in einem Bereich zwischen dem Wasserinjektor und dem Wassertank befindliches Wasser rückzusaugen und dem Wassertank zuzuführen, wenn der Wasserinjektor geöffnet ist. Durch die Benutzung eines Injektors, der sowohl Wasser als auch Kraftstoff einspritzen kann, wird eine raumsparende Anordnung erzielt. Durch das Vorsehen des Wasserinjektors und die beschriebene Betriebsweise des Förderelements kann mindestens eine Teilmenge von Wasser aus dem Wasserinjektor und/oder dem Bereich zwischen dem Wasserinjektor und dem Wassertank entfernt werden, so dass auch bei einer Vereisung der Wasserinjektor und/oder andere wasserführenden Komponenten nicht beschädigt werden. Ferner tritt durch das Öffnen des Wasserinjektors Luft in den Wasserinjektor ein, was zu einer schnellen Förderung des Wassers aus dem Wasserinjektor zum Wassertank führt.
Im Normalbetrieb der Wassereinspritzvorrichtung bzw. der Brennkraftmaschine kann der Wasserinjektor neben dem Wasser-Kraftstoffinjektor zum Einspritzen von Wasser verwendet werden. Insbesondere trägt der Wasserinjektor dabei zum Abkühlen der Ansaug- und/oder Ladeluft bei, falls eine Aufladung der Brennkraftmaschine vorgesehen ist, sowie zur Reinigung des Saugrohrs, des Einlasskanals und der Einlassventile. Als normaler Betrieb ist der Betrieb zu verstehen, bei welchem Wasser vom Wassertank zu dem Wasserinjektor und/oder Wasser-Kraftstoffinjektor, insbesondere verbrennungsbedingt, gefördert wird. Erfindungsgemäß ist der Wasserinjektor in einer Abzweigleitung von der Wasserleitung vor dem Wasser-Kraftstoffinjektor angeordnet, wobei in der Wasserleitung zwischen der Abzweigleitung und dem Wasser-Kraftstoff-Injektor ein Absperrelement angeordnet ist. Somit wird sichergestellt, dass beim Rücksaugen von Wasser aus dem Wasserinjektor und dem Bereich zwischen dem Wassertank und dem Wasserinjektor kein Kraftstoff und/oder kein Kraftstoff-Wasser-Gemisch aus dem Wasser-Kraftstoffinjektor zurück in die Wasserleitung bzw. den Wassertank gelangt.

Die Unteransprüche zeigen bevorzugte Weiterbildungen der Erfindung.

Vorzugsweise ist die Steuereinheit eingerichtet, den Wasserinjektor nach dem Abstellen der Brennkraftmaschine, insbesondere nach jedem Abstellen der Brennkraftmaschine, zu öffnen und das im Wasserinjektor und/oder im Bereich zwischen dem Wasserinjektor und dem Wassertank befindliche Wasser rückzusaugen und dem Wassertank zuzuführen. Dies ist besonders vorteilhaft, weil nach Abstellen der Brennkraftmaschine keine (verbrennungsrelevante) Wassereinspritzung stattfindet, wodurch anderenfalls das Wasser in der Wassereinspritzung stehen bleiben würde. Dies könnte bei niedrigen Temperaturen unter dem Gefrierpunkt des Wassers eine Beschädigung der Bauteile der Wassereinspritzvorrichtung, insbesondere des Wasserinjektors, aufgrund einer Vereisung hervorrufen. Insbesondere verfügt die Brennkraftmaschine über kein Start-Stop-System und/oder ist nicht in einem Hybrid-Fahrzeug vorgesehen.

Nach einer bevorzugten Ausgestaltung der Erfindung ist das Absperrelement als Rückschlagventil ausgebildet, welches in der Richtung vom Wassertank zum Wasser-Kraftstoffinjektor öffenbar ist. Das bietet den Vorteil einer einfachen und kostengünstigen Lösung zum Absperren des Wegs zum Wassertank für den Kraftstoff und/oder das Wasser-Kraftstoff-Gemisch aus dem Wasser-Kraftstoffinjektor. Beim Rücksaugen durch das Förderelement und den dadurch erzeugten Unterdruck in der Wasserleitung und der Abzweigleitung wird das Rückschlagventil geschlossen oder bleibt in der geschlossenen Stellung.

Das Absperrelement kann nach einer alternativen bevorzugten Ausgestaltung der Erfindung ein steuerbares Absperrventil sein. Die Steuerung des steuerbaren Absperrventils erfolgt dabei vorzugsweise durch die Steuereinheit.

Vorzugsweise ist der Wasserinjektor an einem Saugrohr der Brennkraftmaschine angeordnet. Als Saugrohr ist das Bauteil zu verstehen, welches am Zylinderblock der Brennkraftmaschine angeordnet ist, und über das der Zylinder oder die Zylinder der Brennkraftmaschine mit Luft versorgt werden. Das Saugrohr umfasst einen oder mehrere Einlasskanäle. Insbesondere weist das Saugrohr einen Bereich mit einer Querschnittsfläche auf, der in die Einlasskanäle abzweigt. Die Einlasskanäle haben jeweils eine kleinere Querschnittsfläche als die Querschnittsfläche des Saugrohrs. Aufgrund der Positionierung des Wasserinjektors im Saugrohr kann im Normalbetrieb eine gemeinsame Wassereinspritzung für alle Einlasskanäle stattfinden.

Wenn bei der Brennkraftmaschine ein Turbolader mit einer Turbine und einem Verdichter zur Erhöhung des Drucks der angesaugten Luft vorgesehen ist, kann vorzugsweise der Wasserinjektor vor oder nach dem Verdichter des Turboladers in Ansaugrichtung der Luft angeordnet sein. Durch die Positionierung des Wasserinjektors vor dem Verdichter kann die angesaugte Luft mit Wasser vor der Verdichtung bereichert werden, wodurch die Eigenschaften der verdichteten Luft kontrolliert werden können. Bei der Anordnung des Wasserinjektors nach dem Verdichter kann die eingespritzte Wassermenge die durch die Verdichtung angestiegene Temperatur der verdichteten Luft reduzieren.

Nach einer weiteren alternativen bevorzugten Ausgestaltung der Erfindung kann der Wasserinjektor an einem Bereich, insbesondere an einem Luftansaugbereich, vor einer Drosselklappe angeordnet sein. Somit kann gleichzeitig mit der Regulierung der Luft auch die Regulierung der in der Luft mitaufgenommenen eingespritzten Wassermenge erfolgen.

Bevorzugt ist die Steuereinheit eingerichtet, den Wasserinjektor vollständig zu entleeren. Alternativ ist es vorstellbar, dass die Steuereinheit eingerichtet ist, das Förderelement und/oder den Wasserinjektor derart anzusteuern, dass eine vorbestimmte Wasserrestmenge im Wasserinjektor zurückbleibt. Im letzteren Fall kann somit eine nachfolgende angeforderte Wassereinspritzung unverzüglich bereitgestellt werden, was besonders vorteilhaft bei hohen Lastsprüngen ist.

Die Erfindung betrifft ferner eine Brennkraftmaschine, die eine zuvor beschriebene Wassereinspritzvorrichtung umfasst.

Ein weiterer Aspekt der Erfindung bezieht sich auf ein Verfahren zum Betreiben einer Wassereinspritzvorrichtung einer Brennkraftmaschine. Die Wassereinspritzvorrichtung umfasst dabei einen Wassertank, mindestens einen Wasser-Kraftstoffinjektor, der mittels einer Wasserleitung mit dem Wassertank verbunden ist, und über eine Kraftstoffleitung mit Kraftstoff versorgbar ist, wobei der Wasser-Kraftstoffinjektor eingerichtet ist, Wasser und/oder Kraftstoff einzuspritzen, mindestens einen Wasserinjektor, und ein Förderelement. Vorzugsweise umfasst das Verfahren die Schritte des Öffnens des Wasserinjektors, des Rücksaugens von im Wasserinjektor und/oder in einem Bereich zwischen dem Wasserinjektor und dem Wassertank befindlichen Wasser, und des Zuführens des Wassers zu dem Wassertank. Die mit Bezug auf die Wassereinspritzvorrichtung beschriebenen Vorteile sind auch hier gegeben. Erfindungsgemäß ist der Wasserinjektor in einer Abzweigleitung an der Wasserleitung vor dem Wasser-Kraftstoffinjektor angeordnet, wobei in der Wasserleitung zwischen der Abzweigleitung und dem Wasser-Kraftstoff-Injektor ein Absperrelement angeordnet ist, das beim Rücksaugen des Wassers geschlossen wird.

Vorzugsweise wird der Wasserinjektor nach dem Abstellen der Brennkraftmaschine, insbesondere nach jedem Abstellen der Brennkraftmaschine, geöffnet und das im Wasserinjektor und/oder im Bereich zwischen dem Wasserinjektor und dem Wassertank befindliche Wasser rückgesaugt.

### Kurze Beschreibung der Zeichnung

Nachfolgend werden Ausführungsbeispiele der Erfindung unter Bezugnahme auf die begleitende Zeichnung im Detail beschrieben, wobei gleiche bzw. funktional gleiche Teile jeweils mit dem gleichen Bezugszeichen bezeichnet sind. In der Zeichnung ist:
- Figur 1: eine stark vereinfachte schematische Ansicht einer Brennkraftmaschine mit einer Wassereinspritzvorrichtung gemäß einem ersten Ausführungsbeispiel der vorliegenden Erfindung,
- Figur 2: eine vereinfachte schematische Ansicht der Wassereinspritzvorrichtung gemäß dem ersten Ausführungsbeispiel im normalen Betrieb,
- Figur 3: eine stark vereinfachte schematische Ansicht einer Brennkraftmaschine mit einer Wassereinspritzvorrichtung gemäß einem zweiten Ausführungsbeispiel,

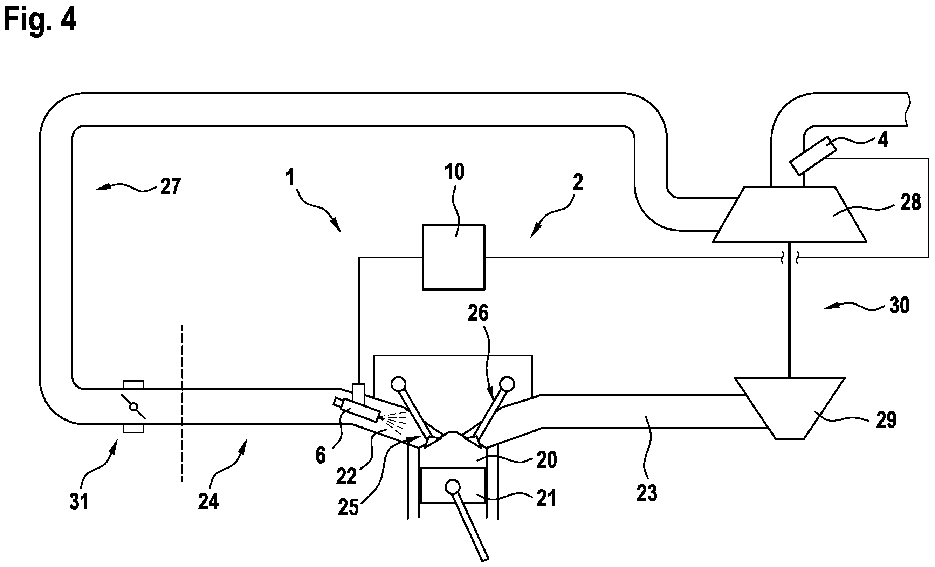

- Figur 4: eine stark vereinfachte schematische Ansicht einer Brennkraftmaschine mit einer Wassereinspritzvorrichtung gemäß einem dritten Ausführungsbeispiel, und
- Figur 5: eine stark vereinfachte schematische Ansicht einer Brennkraftmaschine mit einer Wassereinspritzvorrichtung gemäß einem 4ten Ausführungsbeispiel.

### Ausführungsformen der Erfindung

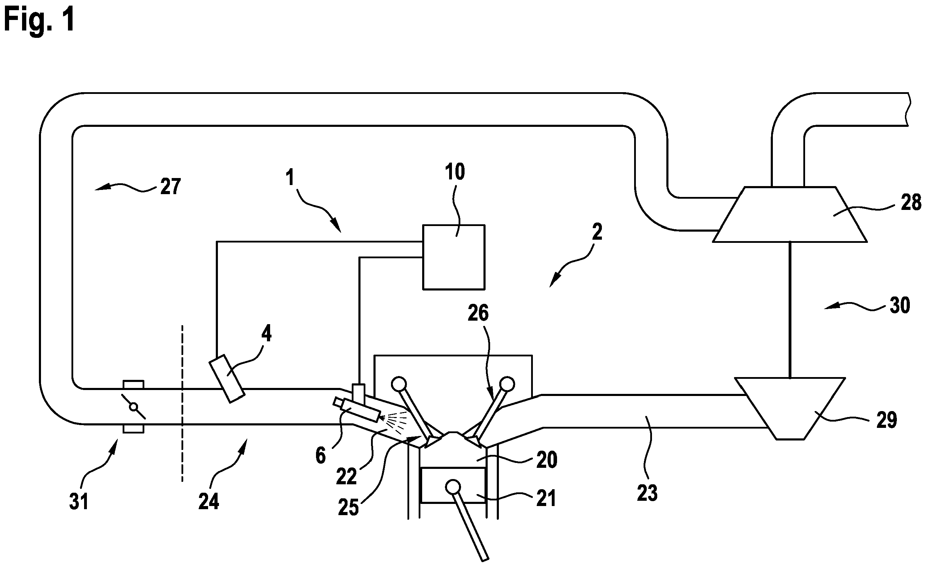

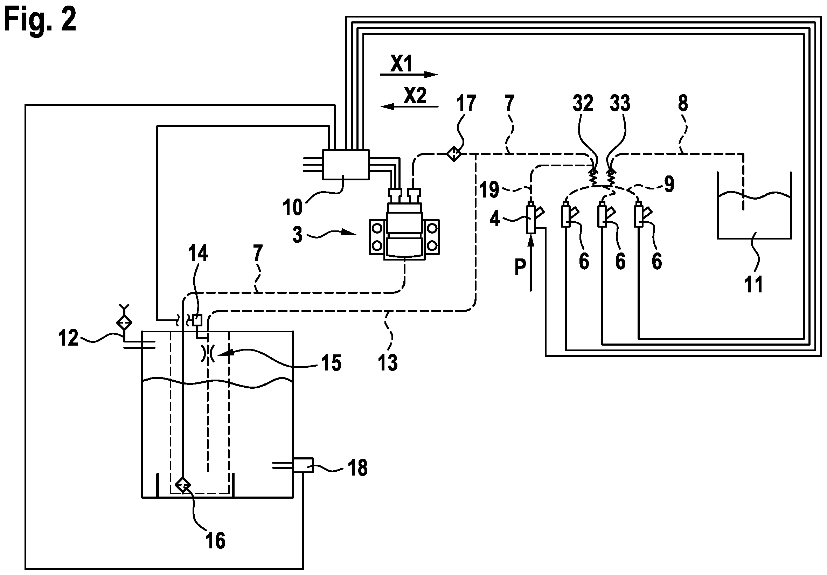

Nachfolgend wird unter Bezugnahme auf die Figuren1 und 2 eine Wassereinspritzvorrichtung 1 einer Brennkraftmaschine 2 gemäß einem ersten Ausführungsbeispiel im Detail beschrieben. Insbesondere wird die Brennkraftmaschine 2 nach dem Otto-Prinzip und mit Benzindirekteinspritzung betrieben.

In Figur 1 ist die Brennkraftmaschine 2, welche eine Vielzahl von Zylindern aufweist, sowie ein Teil der erfindungsgemäßen Wassereinspritzvorrichtung 1 schematisch dargestellt. Die Brennkraftmaschine 2 umfasst pro Zylinder einen Brennraum 20, in welchem ein Kolben 21 hin und her bewegbar ist. Ferner weist vorzugsweise die Brennkraftmaschine 2 pro Zylinder einen Einlasskanal 22 auf, über welchen Luft zum Brennraum 20 zugeführt wird. Abgas wird über einen Abgaskanal 23 abgeführt. Hierzu sind am Einlasskanal 22 ein Einlassventil 25 und am Abgaskanal 23 ein Auslassventil 26 angeordnet.

Das Bezugszeichen 24 bezeichnet ein Saugrohr. Als Saugrohr ist das Bauteil zu verstehen, welches an einem Zylinderblock der Brennkraftmaschine 2 angeordnet ist, und über das die Zylinder der Brennkraftmaschine 2 mit Luft versorgt werden. Das Saugrohr 24 umfasst die Einlasskanäle 22.

Ferner ist mit dem Bezugszeichen 27 ein Ansaugtraktrohr bezeichnet. Das Ansaugtraktrohr 27 ist das Rohr, das an einem Ende mit der Umgebung kommuniziert und am anderen Ende mit dem Saugrohr 24 verbunden ist. Im Ansaugtraktrohr 27 ist ferner eine Drosselklappe 31 angeordnet. Die gestrichelte Linie deutet das Ende des Ansaugtraktrohrs 27 bzw. den Anfang des Saugrohrs 24 an.

Ferner ist vorzugsweise bei der Brennkraftmaschine 2 ein Turbolader 30 mit einem Verdichter 28 und einer Turbine 29 vorgesehen. Der Verdichter 28 ist im Ansaugtraktrohr 27 positioniert, wobei die Turbine 29 im Abgaskanal 23 angeordnet ist.

An jedem Einlasskanal 22 ist ferner bevorzugt ein Wasser-Kraftstoffinjektor 6 angeordnet, welcher eingerichtet ist, im Normalbetrieb Wasser und/oder Kraftstoff in den Einlasskanal 22 der Brennkraftmaschine 2 einzuspritzen. Alternativ können die Wasser-Kraftstoffinjektoren 6 am Saugrohr 24 positioniert sein. Die Steuerung der Wasserinjektoren 6 erfolgt über eine Steuereinheit 10.

In diesem Ausführungsbeispiel ist ein Wasser-Kraftstoffinjektor 6 pro Zylinder vorgesehen. Alternativ können zur besseren Aufbereitung oder zur Erhöhung der pro Verbrennungszyklus maximal einspritzbaren Wasser-und/oder Kraftstoffmenge zwei Wasser-Kraftstoffinjektoren 6 pro Zylinder angeordnet sein.

Weiterhin ist ein Wasserinjektor 4 vorgesehen, der in diesem Ausführungsbeispiel am Saugrohr 24 angebracht ist. Der Wasserinjektor 4 ist eingerichtet, im Normalbetrieb Wasser in das Saugrohr 24 einzuspritzen.

Auch der Wasserinjektor 4 wird durch die Steuereinheit 10 angesteuert.

In Figur 2 ist die erfindungsgemäße Wassereinspritzvorrichtung 1 gemäß dem ersten Ausführungsbeispiel im Detail gezeigt.

Die Wassereinspritzvorrichtung 1 umfasst vorzugsweise ein als Pumpe ausgebildetes Förderelement 3. Des Weiteren ist ein Wassertank 5 zur Speicherung von Wasser vorgesehen, welcher durch eine Wasserleitung 7 mit den Wasser-Kraftstoffinjektoren 6 verbunden ist. Das Förderelement 3 ist in der Wasserleitung 7 angeordnet. Insbesondere sind die Wasser-Kraftstoffinjektoren 6 an einem Verteiler 9 bzw. Rail angeschlossen.

Zusätzlich kommunizieren bevorzugt die Wasser-Kraftstoffinjektoren 6 über eine Kraftstoffleitung 8 mit einem Kraftstofftank 11, wodurch die Wasser-Kraftstoffinjektoren 6 mit Kraftstoff versorgbar sind.

Zum Einspritzen von Wasser durch den Wasserinjektor 4 und die Wasser-Kraftstoffinjektoren 6 wird bevorzugt deionisiertes Wasser über eine Nachfüllleitung 12 in den Wassertank 5 gefördert. In der Nachfüllleitung 12 kann optional ein Sieb vorgesehen sein. Ferner sind vorzugsweise in der Wasserleitung 7 ein Vorfilter 16 vor dem Förderelement 3 und ein Feinfilter 17 nach dem Förderelement 3 in Richtung vom Wassertank 5 zum Förderelement 3 angeordnet, wobei die Filter optional beheizt werden können.

Wird nun über die Steuereinheit 10, welche bevorzugt als die Steuereinheit der Brennkraftmaschine 2 ausgebildet ist, eine Wassereinspritzung im Normalbetrieb angefordert, so wird mittels des Förderelements 3 Wasser aus dem Wassertank 5 angesaugt und zum Wasserinjektor 4 und/oder den Wasser-Kraftstoffinjektoren gefördert. Hierbei wird das Wasser in einer ersten Förderrichtung X1 zu den Injektoren gefördert.

Zum Einstellen des gewünschten Systemdrucks in der Wasserleitung 7 und im Verteiler 9 ist ein Druckregler 15 in der Form einer Blende oder einer Saugstrahlpumpe in einer Rücklaufleitung 13 angeordnet, welche die Wasserleitung 7 nach dem Förderelement 3 mit dem Wassertank 5 verbindet. Zur Druckregelung ist ferner ein Drucksensor 14 in der Rücklaufleitung 13 vorgesehen. Des Weiteren ist ein Füllstandsensor 18 am Wassertank 5 angebracht.

Vorzugsweise ist der Wasserinjektor 4 in einer Abzweigleitung 19 an der Wasserleitung 7 vor den Wasser-Kraftstoffinjektoren 6 bzw. dem Verteiler 9 angeordnet. In der Wasserleitung 7 nach der Abzweigleitung 19 ist bevorzugt ein Absperrelement 32 (erstes Absperrelement) vorgesehen.

Das Absperrelement 32 ist vorteilhafterweise als Rückschlagventil ausgebildet, das sich in Richtung vom Wassertank 5 zu den Wasser-Kraftstoffinjektoren 6 öffnet.

Ferner ist vorzugsweise ein weiteres Absperrelement 33 (zweites Absperrelement) in der Kraftstoffleitung 8 vorgesehen. Dieses Absperrelement dient dazu, einen Zurücklauf von Wasser und/oder Wasser-Kraftstoff-Gemisch zum Kraftstofftank 11 zu blockieren.

Wenn die Wassereinspritzvorrichtung 1 bei Temperaturen unterhalb des Gefrierpunktes des Wassers beim Fahren oder Abstellen der Brennkraftmaschine deaktiviert ist, kann es aufgrund des in der Wassereinspritzvorrichtung 1 stehenden Wassers zu einer Vereisung des Bereichs zwischen dem Wassertank 5 und dem Wasserinjektor 4 bzw. der Wasser-Kraftstoffinjektoren 6 führen. Dieser Bereich umfasst vorzugsweise die Wasserleitung 7 und die Abzweigleitung 19.

Um eine solche Vereisung zu vermeiden, ist das Förderelement 3 eingerichtet, im Wasserinjektor 4 und/oder in der Abzweigleitung 19 und/oder Wasserleitung 7 befindliches Wasser in den Wassertank 5 zurück zu fördern.

Dazu wird das Förderelement 3 über die Steuereinheit 10 gesteuert, die Betriebsrichtung des Förderelements 3 zu ändern, so dass das Wasser in einer zweiten Förderrichtung X2 dem Wassertank 5 zugeführt wird.

Nachdem Unterdruck in der Wasserleitung 7 vor dem Absperrelement 32 und in der Abzweigleitung 19 aufgebaut ist, wird der Wasserinjektor 4 über die Steuereinheit 10 geöffnet.

Beim Öffnen des Wasserinjektors 4 tritt Luft in den Wasserinjektor 6 aufgrund des Unterdrucks in der Wasserleitung 7 vor dem Absperrelement 32 und in der Abzweigleitung 19 ein, was mit dem Bezugszeichen P bezeichnet ist. Durch die eintretende Luft wird das Wasser schnell zum Wassertank 5 gefördert.

Das Absperrelement 32 ist dabei geschlossen, so dass kein Kraftstoff und/oder Wasser-Kraftstoff-Gemisch aus dem Verteiler 9 bzw. den Wasser-Kraftstoffinjektoren 6 in die Abzweigleitung 19, die Rücklaufleitung 13 und die Wasserleitung 7 gelangen kann. Somit wird vermieden, dass Kraftstoff und/oder Wasser-Kraftstoff-Gemisch den Wassertank 5 und den Wasserinjektor 4 erreicht.

Bevorzugt ist die Steuereinheit 10 eingerichtet, den Wasserinjektor 4 vollständig zu entleeren. Alternativ ist es vorstellbar, dass die Steuereinheit eingerichtet ist, das Förderelement 3 und/oder den Wasserinjektor 4 derart anzusteuern, dass eine vorbestimmte Wasserrestmenge im Wasserinjektor 4 zurückbleibt. Im letzteren Fall kann somit eine nachfolgende angeforderte Wassereinspritzung unverzüglich bereitgestellt werden, was besonders vorteilhaft bei Lastsprüngen ist.

Durch die erfindungsgemäße Wassereinspritzvorrichtung 1 werden der Wasserinjektor 6 sowie die Wasserleitung 7 vor einem Gefrieren, insbesondere im Abstellfall der Brennkraftmaschine 2, geschützt. Eine ausfallsichere Funktionsweise der Wassereinspritzvorrichtung 1 und damit der Brennkraftmaschine 2 wird hierdurch sichergestellt. Ferner ist durch die kombinierte Funktionsweise der Wasser-Kraftstoffinjektoren eine
Es sei ferner angemerkt, dass es keine Vereisungsgefahr für die Wasser-Kraftstoffinjektoren besteht, da diese zu jedem Zeitpunkt zumindest teilweise mit Kraftstoff oder Wasser-Kraftstoff-Gemisch befüllt sind, wobei der Kraftstoff eine viel größere Beständigkeit bei niedrigen Temperaturen als das Wasser aufweist. Das heißt, dass der Kraftstoff oder das Wasser-Kraftstoffgemisch, in dem der größte Anteil aus Kraftstoff besteht, einen viel niedrigeren Gefrierpunkt als das Wasser aufweist. Insofern ist eine teilweise oder vollständige Entleerung nicht notwendig.

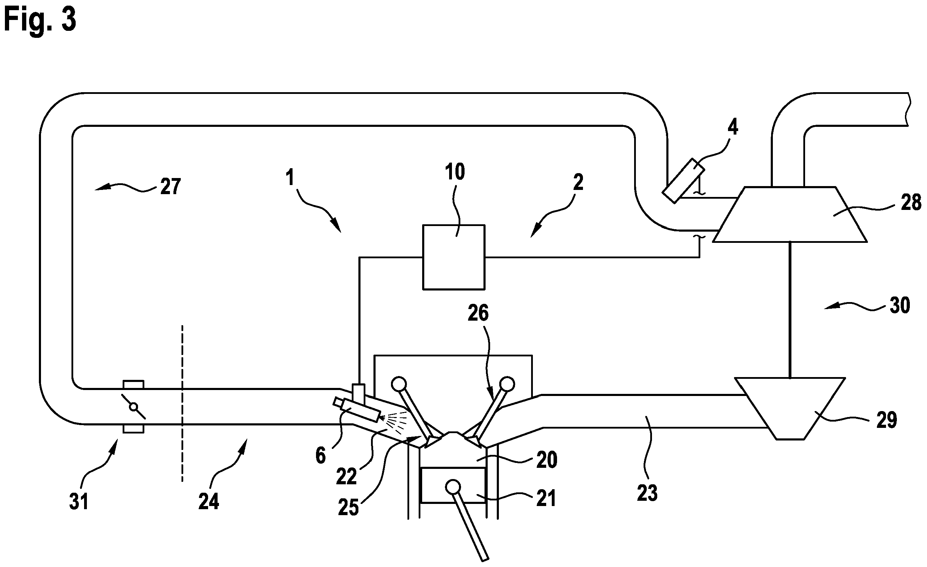

In Figur 3 ist ein zweites Ausführungsbeispiel der vorliegenden Erfindung dargestellt. Der Unterschied hier besteht grundsätzlich in der Anordnung des Wasserinjektors 4.

Diesbezüglich ist der Wasserinjektor 4 im Ansaugtraktrohr 27 in Luftansaugrichtung nach dem Verdichter 28 positioniert.

Gemäß einem dritten Ausführungsbeispiel ist der Wasserinjektor 4 im Ansaugtraktrohr 27 in Luftansaugrichtung vor dem Verdichter 28 positioniert.

Durch die Positionierung des Wasserinjektors 4 vor oder nach dem Verdichter 28 des Turboladers 30 können die Eigenschaften der für die Verbrennung bereitgestellten Luft angepasst werden.

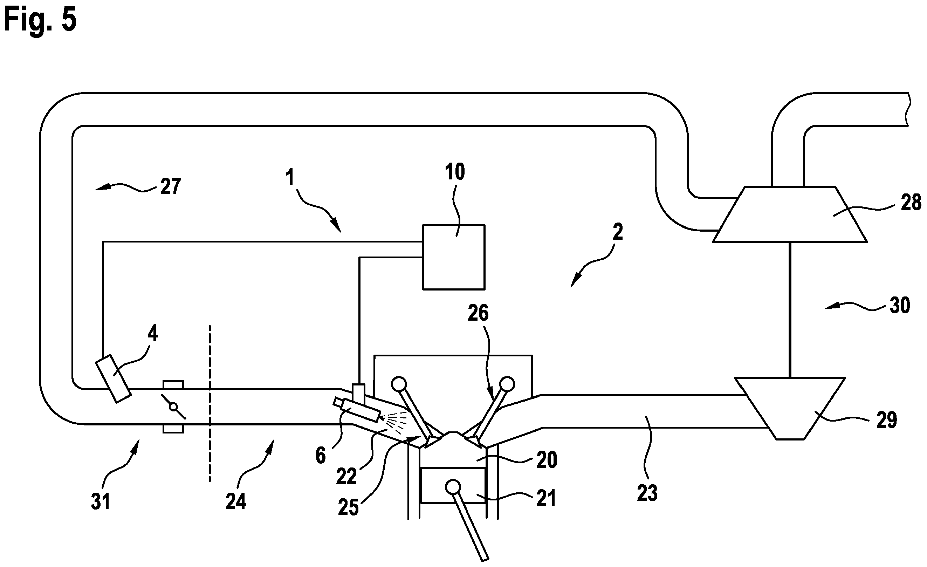

Die Figur 5 zeigt ein viertes Ausführungsbeispiel der Erfindung, wobei sich der Wasserinjektor 4 in einem Ansaugbereich vor der Drosselklappe 31 im Ansaugtrakt 27 befindet. Somit kann durch die Drosselklappe 31 das Wasser-Luft-Gemisch reguliert werden.

## Patentansprüche

1. Wassereinspritzvorrichtung einer Brennkraftmaschine, umfassend:
- einen Wassertank (5) zur Speicherung von Wasser;
- mindestens einen Wasser- Kraftstoffinjektor (6), der mittels einer Wasserleitung (7) mit dem Wassertank (5) verbunden ist und über eine Kraftstoffleitung (8) mit Kraftstoff versorgbar ist, wobei der Wasser-Kraftstoffinjektor (6) eingerichtet ist, Wasser und/oder Kraftstoff einzuspritzen;
- mindestens einen Wasserinjektor (4), der mit dem Wassertank (5) verbunden ist und eingerichtet ist, Wasser einzuspritzen;
- ein Förderelement (3) zum Fördern von Wasser aus dem Wassertank (5) zum Wasserinjektor (4) und/oder zum Wasser-Kraftstoffinjektor (6), und
- eine Steuereinheit (10), welche eingerichtet ist, den Wasserinjektor (4) zu öffnen,
- wobei das Förderelement (3) eingerichtet ist, im Wasserinjektor und/oder in einem Bereich zwischen dem Wasserinjektor (4) und dem Wassertank (5) befindliches Wasser rückzusaugen und dem Wassertank (5) zuzuführen, wenn der Wasserinjektor (4) geöffnet ist,
**dadurch gekennzeichnet, dass** der Wasserinjektor (4) in einer Abzweigleitung (19) von der Wasserleitung (7) zwischen der Abzweigleitung (19) und dem Wasser-Kraftstoff-Injektor (6) angeordnet ist, wobei in der Wasserleitung (7) nach der Abzweigung ein Absperrelement (32) vorgesehen ist.

2. Vorrichtung nach Anspruch 1, wobei die Steuereinheit (10) eingerichtet ist, den Wasserinjektor (4) nach dem Abstellen der Brennkraftmaschine (2), insbesondere nach jedem Abstellen der Brennkraftmaschine (2), zu öffnen und das im Wasserinjektor (4) und/oder im Bereich zwischen dem Wasserinjektor (4) und dem Wassertank (5) befindliches Wasser rückzusaugen und dem Wassertank zuzuführen .

3. Vorrichtung nach einem der vorherigen Ansprüche, wobei das Absperrelement (32) als Rückschlagventil ausgebildet ist, das in Richtung vom Wassertank (5) zum Wasser-Kraftstoffinjektor (6) öffenbar ist.

4. Vorrichtung nach einem der vorherigen Ansprüche, wobei der Wasserinjektor (4) an einem Saugrohr (24) der Brennkraftmaschine (2) angeordnet ist.

5. Vorrichtung nach einem der Ansprüche 1 bis 3, wobei der Wasserinjektor (4) vor oder nach einem Verdichter (28) eines Turboladers (30) angeordnet ist.

6. Vorrichtung nach einem der Ansprüche 1 bis 3, wobei der Wasserinjektor (4) in einem Bereich, insbesondere einem Luftansaugbereich, vor einer Drosselklappe (31) angeordnet ist.

7. Vorrichtung nach einem der vorherigen Ansprüche, wobei die Steuereinheit (10) eingerichtet ist, den Wasserinjektor (4) vollständig zu entleeren.

8. Brennkraftmaschine, welche eine Wassereinspritzvorrichtung (1) nach einem der vorherigen Ansprüche umfasst.

9. Verfahren zum Betreiben einer Wassereinspritzvorrichtung (1) einer Brennkraftmaschine (2), wobei die Wassereinspritzvorrichtung (1) mindestens einen Wasser-Kraftstoffinjektor (6), der mittels einer Wasserleitung (7) mit einem Wassertank (5) verbunden ist und über eine Kraftstoffleitung (8) mit Kraftstoff versorgbar ist, wobei der Wasser-Kraftstoffinjektor (6) eingerichtet ist, Wasser und/oder Kraftstoff einzuspritzen, mindestens einen Wasserinjektor (4), und ein Förderelement (3) umfasst, wobei der Wasserinjektor (4) geöffnet wird und das Förderelement (3) bei geöffnetem Wasserinjektor (4), im Wasserinjektor (4) und/oder in einem Bereich zwischen dem Wasserinjektor (4) und dem Wassertank (5) befindliches Wasser rücksaugt und dem Wassertank (5) zuführt, wobei der Wasserinjektor (4) in einer Abzweigleitung (19) von der Wasserleitung (7) angeordnet ist, wobei in der Wasserleitung (7) zwischen der Abzweigleitung (19) und dem Wasser-Kraftstoff-Injektor (6) ein Absperrelement (32) angeordnet ist, welches beim Rücksaugen des Wassers geschlossen wird..

10. Verfahren nach Anspruch 9, wobei der Wasserinjektor (6) nach dem Abstellen der Brennkraftmaschine (2), insbesondere nach jedem Abstellen der Brennkraftmaschine (2), geöffnet wird und das im Wasserinjektor (4) und/oder im Bereich zwischen dem Wasserinjektor (4) und dem Wassertank (5) befindliche Wasser rückgesaugt wird.

## Claims

1. Water injection device of an internal combustion engine, comprising:
- a water tank (5) for storing water;
- at least one water-fuel injector (6) which is connected by means of a water line (7) to the water tank (5) and which can be supplied with fuel via a fuel line (8), wherein the water-fuel injector (6) is configured to inject water and/or fuel;
- at least one water injector (4) which is connected to the water tank (5) and which is configured to inject water;
- a conveying element (3) for conveying water from the water tank (5) to the water injector (4) and/or to the water-fuel injector (6), and
- a control unit (10) which is configured to open the water injector (4),
- wherein the conveying element (3) is configured to back-suction water that is situated in the water injector and/or in a region between the water injector (4) and water tank (5), and to feed said water to the water tank (5), when the water injector (4) is open,
**characterized in that**
the water injector (4) is arranged in a branch line (19) from the water line (7) between the branch line (19) and the water-fuel injector (6), wherein a shut-off element (32) is provided in the water line (7) downstream of the branching point.

2. Device according to Claim 1, wherein the control unit (10) is configured to open the water injector (4) after the shut-down of the internal combustion engine (2), in particular after every shut-down of the internal combustion engine (2), and to back-suction the water that is situated in the water injector (4) and/or in the region between the water injector (4) and the water tank (5), and to feed said water to the water tank.

3. Device according to any of the preceding claims, wherein the shut-off element (32) is designed as a check valve which can open in the direction from the water tank (5) to the water-fuel injector (6).

4. Device according to any of the preceding claims, wherein the water injector (4) is arranged on an intake pipe (24) of the internal combustion engine (2) .

5. Device according to any of Claims 1 to 3, wherein the water injector (4) is arranged upstream or downstream of a compressor (28) of a turbocharger (30) .

6. Device according to any of Claims 1 to 3, wherein the water injector (4) is arranged in a region, in particular an air intake region, upstream of a throttle flap (31).

7. Device according to any of the preceding claims, wherein the control unit (10) is configured to completely empty the water injector (4).

8. Internal combustion engine, which comprises a water injection device (1) according to any of the preceding claims.

9. Method for operating a water injection device (1) of an internal combustion engine (2), wherein the water injection device (1) comprises at least one water-fuel injector (6), which is connected by means of a water line (7) to a water tank (5) and which can be supplied with fuel via a fuel line (8), wherein the water-fuel injector (6) is configured to inject water and/or fuel, at least one water injector (4), and a conveying element (3), wherein the water injector (4) is opened and the conveying element (3) back-suctions water that is situated in the water injector (4) and/or in a region between the water injector (4) and the water tank (5), and feeds said water to the water tank (5), when the water injector (4) is open, wherein the water injector (4) is arranged in a branch line (19) from the water line (7), wherein a shut-off element (32) is arranged in the water line (7) between the branch line (19) and the water-fuel injector (6), which shut-off element is closed during the back-suctioning of the water.

10. Method according to Claim 9, wherein the water injector (6) is opened after the shut-down of the internal combustion engine (2), in particular after every shut-down of the internal combustion engine (2), and the water that is situated in the water injector (4) and/or in the region between the water injector (4) and the water tank (5) is back-suctioned.

## Revendications

1. Dispositif d'injection d'eau d'un moteur à combustion interne, comprenant :
- un réservoir d'eau (5) pour stocker de l'eau ;
- au moins un injecteur d'eau-carburant (6) qui est connecté au moyen d'une conduite d'eau (7) au réservoir d'eau (5) et qui peut être alimenté en carburant par le biais d'une conduite de carburant (8), l'injecteur d'eau-carburant (6) étant prévu pour injecter de l'eau et/ou du carburant ;
- au moins un injecteur d'eau (4), qui est connecté au réservoir d'eau (5) et qui est prévu pour injecter de l'eau ;
- un élément de refoulement (3) pour refouler de l'eau hors du réservoir d'eau (5) jusqu'à l'injecteur d'eau (4) et/ou jusqu'à l'injecteur d'eau-carburant (6), et
- une unité de commande (10) qui est prévue pour ouvrir l'injecteur d'eau (4),
- l'élément de refoulement (3) étant prévu pour réaspirer l'eau se trouvant dans l'injecteur d'eau et/ou dans une région entre l'injecteur d'eau (4) et le réservoir d'eau (5) et l'acheminer au réservoir d'eau (5) lorsque l'injecteur d'eau (4) est ouvert,
**caractérisé en ce que**
l'injecteur d'eau (4) est disposé dans une conduite de dérivation (19) partant de la conduite d'eau (7) entre la conduite de dérivation (19) et l'injecteur d'eau-carburant (6), un élément de blocage (32) étant prévu dans la conduite d'eau (7) après la dérivation.

2. Dispositif selon la revendication 1, dans lequel l'unité de commande (10) est prévue pour ouvrir l'injecteur d'eau (4) après l'arrêt du moteur à combustion interne (2), en particulier après chaque arrêt du moteur à combustion interne (2), et pour réaspirer l'eau se trouvant dans l'injecteur d'eau (4) et/ou dans la région entre l'injecteur d'eau (4) et le réservoir d'eau (5) et l'acheminer au réservoir d'eau.

3. Dispositif selon l'une quelconque des revendications précédentes, dans lequel l'élément de blocage (32) est réalisé sous forme de clapet antiretour qui peut être ouvert dans la direction allant du réservoir d'eau (5) à l'injecteur d'eau-carburant (6).

4. Dispositif selon l'une quelconque des revendications précédentes, dans lequel l'injecteur d'eau (4) est disposé au niveau d'un tube d'admission (24) du moteur à combustion interne (2).

5. Dispositif selon l'une quelconque des revendications 1 à 3, dans lequel l'injecteur d'eau (4) est disposé avant ou après un compresseur (28) d'un turbocompresseur (30).

6. Dispositif selon l'une quelconque des revendications 1 à 3, dans lequel l'injecteur d'eau (4) est disposé dans une région, en particulier une région d'aspiration d'air, avant un clapet d'étranglement (31).

7. Dispositif selon l'une quelconque des revendications précédentes, dans lequel l'unité de commande (10) est prévue pour vider complètement l'injecteur d'eau (4).

8. Moteur à combustion interne comprenant un dispositif d'injection d'eau (1) selon l'une quelconque des revendications précédentes.

9. Procédé pour faire fonctionner un dispositif d'injection d'eau (1) d'un moteur à combustion interne (2), le dispositif d'injection d'eau (1) comprenant au moins un injecteur d'eau-carburant (6) qui est connecté au moyen d'une conduite d'eau (7) à un réservoir d'eau (5) et qui peut être alimenté en carburant par le biais d'une conduite de carburant (8), l'injecteur d'eau-carburant (6) étant prévu pour injecter de l'eau et/ou du carburant, au moins un injecteur d'eau (4), et un élément de refoulement (3), l'injecteur d'eau (4) étant ouvert et l'élément de refoulement (3), lorsque l'injecteur d'eau (4) est ouvert, réaspirant l'eau se trouvant dans l'injecteur d'eau (4) et/ou dans une région entre l'injecteur d'eau (4) et le réservoir d'eau (5) et l'acheminant au réservoir d'eau (5), l'injecteur d'eau (4) étant disposé dans une conduite de dérivation (19) partant de la conduite d'eau (7), un élément de blocage (32) étant disposé dans la conduite d'eau (7) entre la conduite de dérivation (19) et l'injecteur d'eau-carburant (6), lequel est fermé lors de la réaspiration de l'eau.

10. Procédé selon la revendication 9, dans lequel l'injecteur d'eau (6), après l'arrêt du moteur à combustion interne (2), en particulier après chaque arrêt du moteur à combustion interne (2), est ouvert et l'eau se trouvant dans l'injecteur d'eau (4) et/ou dans la région entre l'injecteur d'eau (4) de le réservoir d'eau (5) est réaspirée.
